Europäisches Patentamt

European Patent Office

Office européen des brevets

(11) Publication number: **0 132 234**
**B1**

# (12) EUROPEAN PATENT SPECIFICATION

(45) Date of publication of patent specification: 30.03.88

(21) Application number: **84830180.0**

(22) Date of filing: **15.06.84**

(51) Int. Cl.⁴: **G 03 B 21/26**

(54) **Method and equipment to obtain subtitles during the screening of a motion picture print.**

(30) Priority: **17.06.83 IT 945883**

(43) Date of publication of application:
**23.01.85 Bulletin 85/04**

(45) Publication of the grant of the patent:
**30.03.88 Bulletin 88/13**

(84) Designated Contracting States:
**AT BE CH DE FR GB IT LI LU NL SE**

(56) References cited:
**FR-A-2 195 357**
**FR-A-2 353 106**

(73) Proprietor: **Fiumi, Fabrizio**
**Via S. Agostino 5**
**I-50125 Firenze (IT)**

(72) Inventor: **Fiumi, Fabrizio**
**Via S. Agostino 5**
**I-50125 Firenze (IT)**

Courier Press, Leamington Spa, England.

## Description

When projecting motion pictures, there is a need for the simultaneous projection of subtitles to allow the understanding of the film, said subtitles being a more or less synthesized translation of the sound track of the original print.

Usually, the print itself is used to display the subtitles, which have been copied onto successive frames, so that each subtitle remains for an adequate period of time and in synchronism with the projection. This system is particularly time consuming and expensive both for lab time and for the fact that a given print is designated forever to the subtitles of a given language. That same print cannot be used for other languages. The copying of said subtitles is very time consuming because usually a number of between 700 and 1200 subtitles are copied onto a feature length film. Sometimes, in the case of "protected" prints — today in increasing number — it is practically impossible to use the traditional method of copying.

Other solutions have been attempted, for example projecting a second print, having subtitles only, simultaneously with the original print. This system is particularly complicated because it requires two projectors, two prints of the same length, and a synchronization of the two projections which is hard to maintain during a complete show.

The system according to this invention allows a very simple and fast preparation. No alteration of the print is necessary and even subtitling of "protected" prints is possible. Further advantages will be evident from the following description. Other advantages are: the possibility of having subtitles together with existing ones; no subtitles superimposed on the frame so that the picture is undisturbed; the possibility of regulating the luminosity of the subtitles.

These advantages are obtained by a system as indicated in Claim 1.

The code marks can be formed on the lateral sides of the print, particularly in the area between the perforation holes.

The code marks can be placed only beside the first frame of the sequence during which the subtitles have to appear. In order to obtain a determined time period of display of a subtitle, cancelling signals may be used or, better yet, the starting signal of a successive subtitle (in case of a running dialogue) can be used.

Another solution consists in using a timer to limit the duration of all subtitles to a given period of time, or varying lengths of time, according to programmed software or intermittent interruptions operated by signals from other subtitles.

Different displays can be used simultaneously for different subtitles. These subtitles can begin or end at different times, with partial overlap. For example, there can first be a subtitle with a question, then the subtitle of an answer, then the subtitle of the question will disappear and then the subtitle of the answer.

Several displays can be used so that, for example, the same subtitle can appear in two different languages simultaneously and completely synchronized with the single print being shown.

It is evident that with this system the print is in no way altered and the same print can be used without subtitles or at a later time with subtitles in various languages, easily recorded and replaceable in the system. A print already having subtitles can be used.

The formation of the subtitles on the display can be obtained by dots or in any other suitable way.

The system includes substantially: a code reader; a microprocessor with removable, interchangeable mass memory devices to store ordered subtitles; at least one display, preferably with dots, which light up to form various successive subtitles, according to the software in the microprocessor.

The system may include means for regulating the luminosity. The regulation can be set constant for the duration of the show, or variable according to the luminosity of the subject being projected. An advantage is that the luminosity can increase gradually at the beginning and gradually decrease at the end of the time of display of the subtitle. A print to put into function the above mentioned method bears code marks on the area outside of the frame and, particularly, in the areas between the holes of one or both perforations of a print; these code marks can be bar codes. These code marks can be formed by any system; they can even be applied to the so-called "transfer" system and then be protected. As an alternative, the code marks can be of magnetic type, with discontinuously applied magnetically supported zones or, even better, with a continuous zone and localized magnetization. Such a zone can be a track or even a preparation on the entire print.

The attached drawing shows an embodiment of the invention.

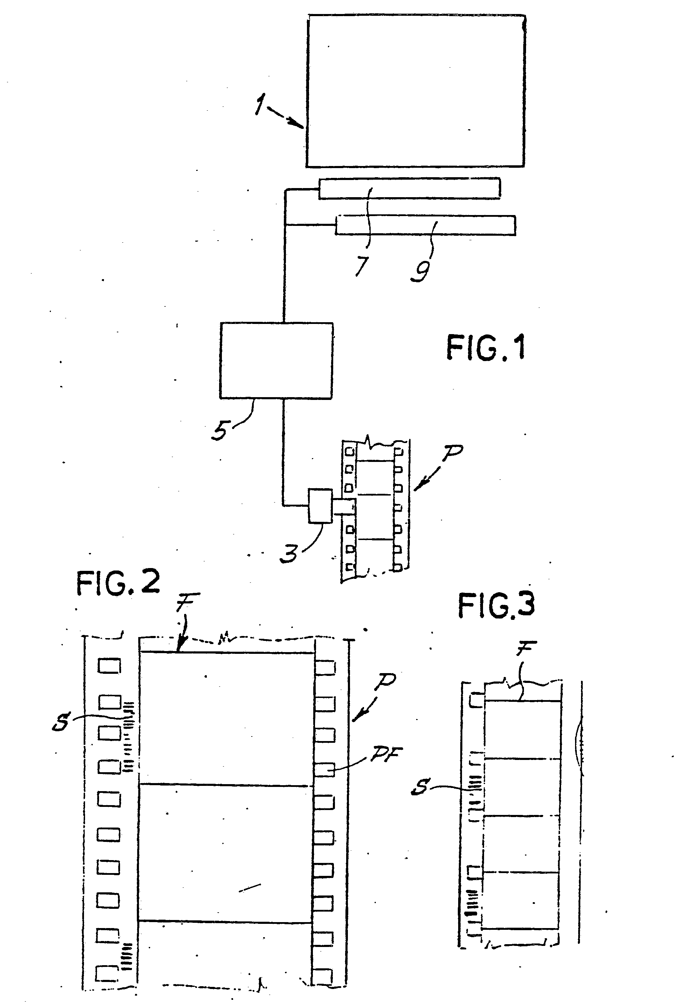

In particular: Figure 1 shows a scheme demonstrating the system and Figures 2 and 3 show two types of film with frames and code marks.

1 indicates the screen onto which a frame F is projected by a projector.

P indicates the film strip (print); F is the frame; PF are the perforations which are at a standard distance from one another and on either both sides (35 mm) or along only one side of a print of smaller size (16 mm).

Code marks S, for example bar codes, are applied or formed in areas of the film strip which are otherwise unused, and it seems particularly opportune to place these code marks S in between successive holes.

For the reading of the code marks S, a reader 3 is provided which in turn sends proper signals to a microprocessor 5 with cards, disks, or other mass memory devices containing the subtitles to be displayed in combination with the images of the film strip (print). The code marks S are such that they can recall a single subtitle to be successively displayed for a determined length of time or until a cancelling code mark reaches reader 3 or until a successive subtitle code mark reaches the same reader.

Device 5 commands one or two displays 7 and/ or 9, where the subtitles are formed through selection by the code marks, each subtitle corresponding to a code mark.

The display or displays are placed in suitable positions outside area 1 (image projection) which is not disturbed by the subtitle, while the subtitle is easily legible.

All the advantages of this system will be evident to the experts.

The drawing shows only a sample of a practical embodiment of the invention.

## Claims

1. A system for displaying subtitles during the projection of a cinematographic film (P) onto a projection screen (1) characterized by code marks (S) on said film (P), a code reader (3) for reading said code marks, a microprocessor (5) comprising a mass memory, said memory containing prerecorded subtitles, at least one alphanumeric display (7, 9) positioned adjacent to said screen (1), the subtitles stored in said mass memory being recalled by said code reader (3) and displayed on said alphanumeric display (7, 9) simultaneously with the corresponding film frame (F).

2. A system as claimed in Claim 1, wherein the code marks (S) are formed on the sides of the film (P), preferably in the area between successive perforation holes (PF) or in areas outside said perforations.

3. A system as claimed in Claim 1, wherein the code marks (S) are formed adjacent to the first frame of a sequence of frames during which the corresponding subtitle is to be displayed.

4. A system as claimed in Claims 1 to 3, wherein the time during which the subtitle is displayed is determined by a cancelling signal.

5. A system as claimed in Claims 1 to 3, wherein in the case of a running dialogue, the time during which the subtitle is displayed is terminated by the code mark of the successive subtitle.

6. A system as claimed in Claims 1 to 3, wherein the time during which the subtitle is displayed is constant.

7. A system as claimed in the preceding claims, wherein different subtitles are displayed simultaneously on different displays (7, 9), the subtitles beginning and ending at different times with partial overlapping.

8. A system as claimed in the preceding claims, wherein more than one display and a like number of mass memories is used to display the subtitles in more than one language.

9. A system as claimed in the preceding claims, wherein means are provided to regulate the luminosity of the display(s), which may also vary with time.

10. A film (P) to be used in the above mentioned system, having code marks (S) formed on the sides of said film, preferably in the area between successive perforation holes (PF) or in areas outside said perforations.

11. A film (P) as claimed in Claim 10, wherein the code marks (S) are applied with the so-called "transfer" system and eventually protected.

12. A film (P) as claimed in Claim 10, wherein the code marks (S) are of magnetic type on a magnetic support provided on said film.

## Patentansprüche

1. Ein Verfahren zum Vorzeigen von Untertiteln während der Projektion eines Filmes (P) auf eine Projektionsleinwand (1) charakterisiert durch Kodierungszeichen (S) auf besagtem Film (P), ein Lesegerät (3) zum Lesen der besagten Kodierungszeichen, einen Mikroprocessor (5) einschliesslich eines Datenspeichers, besagter Speicher enthält zum Voraus eingespeicherte Untertitel, mindestens eine alphanumerische Anzeigetafel (7, 9) welche in der Nähe der besagten Projektionsleinwand (1) aufgestellt ist, die Untertitel welche in besagtem Datenspeicher gespeichert sind werden durch das besagte Lesegerät (3) abgerufen und auf besagter alphanumerischen Anzeigetafel (7, 9) vorgezeigt, simultan mit dem entsprechenden Filmbild (F).

2. Ein Verfahren wie in Anspruch 1 beansprucht, bei welchem die Kodierungszeichen (S) auf der Seite des Films (P) angebracht sind, vorzugsweise auf der Fläche zwischen zwei aufeinanderfolgenden Perforierungslöcher (PF) oder auf Flächen ausserhalb besagter Perforation.

3. Ein Verfahren wie in Anspruch 1 beansprucht, bei welchem die Kodierungszeichen (S) beim ersten Bild einer Bildsequenz, während welcher ein entsprechender Untertitel vorgezeigt werden soll, angebracht sind.

4. Ein Verfahren wie in den Ansprüchen 1 bis 3 beansprucht, bei welchem die Zeit, während dem ein Untertitel vorgezeigt wird, durch ein Löschsignal bestimmt wird.

5. Ein Verfahren wie in den Ansprüchen 1 bis 3 beansprucht, bei welchem im Falle eines fliessenden Dialoges die Vorzeggzeit des Untertitels beendet wird durch das Kodierungs- zeichen des nächsten Untertitels.

6. Ein Verfahren wie in Ansprüchen 1 bis 3 beansprucht, bei welchem die Vorzeigezeit der Untertitel konstant bleibt.

7. Ein Verfahren wie in den vorangehenden Ansprüchen beansprucht, bei welchem verschiedene Untertitel gleichzeitig auf verschiedenen Anzeigetafeln (7, 9) vorgezeigt werden, die Untertitel beginnen und enden zu verschiedenen Zeitpunkten mit teilweiser Überschneidung.

8. Ein Verfahren wie in den vorangehenden Ansprüchen beansprucht, bei welchem mehr als eine Anzeigetafel und eine gleiche Anzahl Datenspeicher benützt werden um Untertitel in mehr als einer Sprache vorzuzeigen.

9. Ein Verfahren wie in den vorangehenden Ansprüchen beansprucht, bei welchem mittel vorgesehen sind um die Leuchtstärke der Anzeigetafel(n) zu verändern, dies auch zeitabhängig.

10. Im obengenannten Verfahren wird ein Film (P) verwendet welcher Kodierungszeichen (S) auf der Seite des besagten Films trägt, vorzugsweise auf der Fläche zwischen zwei aufeinanderfolgenden Perforierungslöcher (PF) oder auf Flächen ausserhalb besagter Perforation.

11. Ein Film (P) wie in Anspruch 10 beansprucht, bei welchem die Kodierungszeichen (S) mit dem sogenannten "Transfer" Verfahren angebracht werden und eventuel geschützt werden.

12. Ein Film (P) wie in Anspruch 10 beansprucht, bei welchem die Kodierungszeichen (S) magnetischer Natur sind und auf einem entsprechenden, auf besagtem Film vorgesehenen, Magnetträger angebracht sind.

## Revendications

1. Un procédé de sous-titrage durant la projection d'un film cinématographique (P) sur un écran de projection (1) caractérisé par un système de codification (S) réalisé par des marques à même le film (P), un lecteur de code (3) destiné à interpréter les dites-marques, un microprocesseur (5) comprenant une mémoire masse, dans laquelle sont pré-enregistrés les sous-titres, au moins un système d'affichage alphanumérique (7, 9) situé à proximité de l'écran (1), des soustitles emmagasinés dans la mémoire masse qui sont rappelés par le lecteur de code (3) et affichés sur le système d'affichage alphanumérique (7, 9) simultanément au photogramme correspondant (F).

2. Un système, tel que décrit dans le point 1, qui permet la réalisation des marques de codification (S) sur les bords du film (P), de préférence entre les perforations (PF) ou à l'extérieur de la zone de perforation.

3. Un système, tel que décrit dans le point 1, qui permet la réalisation des marques de codification (S) à côté du premier photogramme d'une séquence durant laquelle doit apparaître le sous-titre·correspondant.

4. Un système, tel que décrit dans les points 1 à 3, grâce auquel la durée pendant laquelle apparait le sous-titre est déterminée par unsystème d'effaçage.

5. Un système, tel que décrit dans les points 1 à 3, qui permet, lors du déroulement d'un dialogue, de mettre fin à l'affichage d'un sous-titre au moyen de la marque de codification du sous-titre successif.

6. Un système, tel que décrit dans les points 1 à 3, dans lequel la durée d'apparition d'un sous-titre est constante.

7. Un système, tel que décrit dans les points précédents, qui permet l'affichage simultané de plusieurs sous-titres sur différents systèmes d'affichage (7, 9), les sous-titres pouvant apparaître et disparaître à des instants différents, en ne se superposant que de façon partielle.

8. Un système, tel que décrit dans les points précédents, qui permet l'utilisation de plusieurs systèmes d'affichage et un nombre correspondant de mémoires masses, en vue d'un soustitrage en plusieurs langues.

9. Un système, tel que décrit dans les points précédents, qui permet de régler la luminosité de l'affichage*, laquelle peut aussi varier suivant les moments. *(des áffichages)

10. Un film (P), à utiliser avec le système mentioné ci-dessus, pourvu de marques de codification (S) practiquées sur les bords du dit-film, de préférence entre les perforations (PF) ou à l'extérieur de la zone de perforation.

11. Un film (P), comme dans le point 10, où les marques de codification (S) sont practiquées à l'aide du système appelé "Transfer" et eventuellement protégées.

12. Un film (P), comme dans le point 10, où les marques de codification (S) sont de type magnétique et paratiquées sur un support magnétique dont est pourvu le dit-film.

0 132 234

FIG.1

FIG.2

FIG.3